# EUROPÄISCHE PATENTSCHRIFT

(11) **EP 3 123 046 B1**
(45) Veröffentlichungstag und Bekanntmachung des Hinweises auf die Patenterteilung: **01.01.2020**
(21) Anmeldenummer: 15718433.4
(22) Anmeldetag: 12.03.2015
(51) Int. Cl.: F16D 13/70

(54) **KUPPLUNG IN BLECHBAUWEISE MIT WENIGSTENS ZWEI KUPPLUNGSSCHEIBEN**
SHEET-METAL CLUTCH, COMPRISING AT LEAST TWO CLUTCH DISKS
EMBRAYAGE DE CONSTRUCTION EN TÔLE MUNI D'AU MOINS DEUX DISQUES D'EMBRAYAGE

(30) Priorität: 27.03.2014 DE 102014205773
(43) Veröffentlichungstag der Anmeldung: 01.02.2017
(73) Patentinhaber: Schaeffler Technologies AG & Co. KG, 91074 Herzogenaurach (DE)
(72) Erfinder: BAUMANN, Michael, 77886 Lauf (DE)
(86) Internationale Anmeldenummer: PCT/DE2015/200153
(87) Internationale Veröffentlichungsnummer: WO 2015/144162

(56) Entgegenhaltungen:
- DE-A1-102011 087 379
- DE-A1-102013 200 408

## Beschreibung

Die Erfindung betrifft eine Kupplung für ein Kraftfahrzeug, mit einem Kupplungsbetätigungsorgan, das zum Kupplungs-Betätigen mit einem Drucktopf in Wirkbeziehung bringbar ist, wobei der Drucktopf zum Einklemmen wenigstens einer Kupplungsscheibe zwischen einer Anpressplatte und einer Gegendruckplatte an der Anpressplatte angreift. Also betrifft die Erfindung auch eine Kraftfahrzeugkupplung etwa mit einem konzentrischen Nehmerzylinder, der auch als "concentric slave cylinder" oder CSC bezeichnet wird und zum Kupplungsbetätigen mit einem bspw. steifen Drucktopf in Wirkbeziehung steht, wobei der Drucktöpf zum axialen Verlagern einer Anpressplatte auf eine Gegendruckplatte zu zum Einklemmen wenigstens einer Kupplungsscheibe an der Anpressplatte angreift.

Aus der EP 1 524 446 A1 ist ein Kupplungsaggregat bekannt mit wenigstens zwei Reibungskupplungen, die jeweils mindestens eine Kupplungsscheibe aufweisen, wobei die beiden Kupplungsscheiben mit einer eigenen anzutreibenden Welle verbindbar sind, und die beiden Kupplungen unabhängig voneinander über jeweils einen Betätigungsmechanismus ein- und ausrückbar sind, wobei ferner die Schließkraft der Kupplungen unmittelbar von den Betätigungsmechanismen aufgebracht wird.

Die DE 10 2011 017 380 A1 offenbart eine Doppelkupplung zum Kuppeln einer motorseitigen Eingangswelle mit einer getriebeseitigen ersten Ausgangswelle und/oder einer getriebeseitigen zweiten Ausgangswelle, mit einer ersten Kupplung, die eine relativ zu einer ersten Gegenplatte axial bewegbare erste Anpressplatte zum Kuppeln einer mit der ersten Ausgangswelle verbundenen ersten Kupplungsscheibe aufweist, einer zweiten Kupplung, die eine relativ zu einer zweiten Gegenplatte axial bewegbare zweite Anpressplatte zum Kuppeln einer mit der zweiten Ausgangswelle verbundenen zweiten Kupplungsscheibe aufweist, eine Betätigungseinrichtung zum Bewegen der ersten Anpressplatte und/oder der zweiten Anpressplatte, und einem mit der zweiten Gegenplatte verbundenen Eingangslager zur Abstützung auf der ersten Ausgangswelle oder zur Abstützung auf der zweiten Ausgangswelle, wobei die zweite Gegenplatte zur Positionierung des Eingangslagers in axialer Richtung zwischen der ersten Kupplungsscheibe und der zweiten Kupplungsscheibe ausgestaltet ist.

Ferner zeigt die DE 10 2009 048 277 A1 eine Doppelkupplung für ein Doppelkupplungsgetriebe mit einer als Hohlwelle ausgestalteten ersten Getriebeeingangswelle und einer konzentrisch in dieser geführten zweiten Getriebeeingangswelle bestehend aus einer ersten zugedrückten und einer zweiten zugezogenen Reibungskupplung mit einer ersten, auf der Hohlwelle mittels eines ersten Wellenlagers verdrehbar gelagerten Gegendruckplatte und zwei gegen jeweils eine Seite der Gegendruckplatte axial unter Zwischenlegung von Reibbelägen jeweils einer, mit jeweils einer Getriebeeingangswelle drehfest verbundenen Kupplungsscheibe verspannbaren, drehfest mit der Gegendruckplatte verbundenen Druckplatten sowie einem hydrostatischen Einrücksystem mit einem um die Hohlwelle angeordneten Zylindergehäuse und zwei darin zur Verspannung der Druckplatten gegenüber der Gegendruckplatte axial in ihrer Richtung gegeneinander verlagerbaren Ringkolben, wobei ferner das erste Wellenlager axial fest auf der Hohlwelle fixiert ist und das Zylindergehäuse mittels eines zweiten Wellenlagers axial fest und gegenüber der Hohlwelle verdrehbar auf dieser aufgenommen ist.

Aus der DE 10 2013 200 408 A1 ist eine nasse Doppelkupplung bekannt, bei welcher, wie bei nassen Kupplung üblich, mehrere Reiblamellen pro Teilkupplung Verwendung finden. Die Reiblamellen wiesen keine vorspannende Feder zwischen Reibbelag und Träger; und die Zwischenanpressplatte ist nicht aus Blech ausgebildet.

Eine trockene Doppelkupplung im 3-Plattendesign, mit jeweils einer Reibscheibe pro Teilkupplung ist aus der DE 10 2011 087 379 A1 bekannt. Bei dieser Ausführungsform ist vorgesehen, dass eine der beteiligten Druckplatten, bzw. die Zentralplatte aus Blech gestanzt ist.

Die Erfindung betrifft vorzugsweise das Gebiet der schaltbar reibschlüssig Drehmoment und/oder Drehzahl zwischen einer Verbrennungskraftmaschine einerseits und zumindest einer Getriebeeingangswelle andererseits koppelnden Kraftfahrzeugkupplungen, insbesondere Kraftfahrzeugeinscheibekupplungen, Kraftfahrzeugdoppelkupplungen oder Kraftfahrzeugmehrscheibenkupplungen.

Wenn man eine trockene bzw. trocken laufende Doppelkupplung mit einer Betätigung durch eine Hebelfeder bzw. Tellerfeder verwendet, so hat dies den Nachteil, dass aufgrund einer hohen Kippsteifigkeit der Tellerfeder nur eine geringe oder keine Ausgleichsfunktion von geometrischen Fehlern der Scheiben, Anpressplatten und dergleichen möglich ist. Dies hat hohe Momentenschwankungen bzw. Schwankungen bei der Drehmomentübertragung zur Folge, die auch als Rupfen bekannt sind. Rupfen ist unerwünscht.

Es sei erläuternd angemerkt, dass die Steifigkeit des Drucktopfes eine Steifigkeit in Betätigungsrichtung betrifft, welche einerseits nicht mit der Kippsteifigkeit der Hebelfeder, die einen Widerstand gegen ein Verkippen um eine Radialrichtung betrifft, zu verwechseln ist, sondern welche andererseits einen funktionalen Unterschied zu der federnden Nachgiebigkeit der Hebelfeder in Betätigungsrichtung darstellt.

Man könnte auch eine trockene Einscheiben-Doppelkupplung mit einer direkten Betätigung, also ohne Zwischenschalten einer Tellerfeder, verwenden. Aufgrund von bspw. einer Belastbarkeitsgrenze dabei verwendeter Lager und/oder einer nur begrenzt zur Verfügung stehenden, durch einen Kupplungsbetätiger bzw. eine Aktorik aufbringbaren Energie ist aber das übertragbare Drehmoment, auch als Drehmomentkapazität bezeichnet, begrenzt. Eine Begrenzung des übertragbaren Drehmoments ist aber unerwünscht.

Ferner könnte man eine einfache Zwei-Scheibenkupplung mit einem selbstnachstellenden Verschleißausgleich, auch als selbstnachstellende Kupplung oder fachsprachlich als "self-adjusting clutch" oder kurz SAC bezeichnet, verwenden. Solche Kupplungen sind insbesondere im Bereich manuell schaltbarer Getriebe bzw. Handschaltgetriebe oder Handschalter und automatisierter Handschaltgetriebe verbreitet. Da solche Kupplungen üblicherweise eine Tellerfeder verwenden, zeigen solche Kupplungen aber, wie oben beschrieben, die Neigung zum Rupfen oder sind mit hohen Kosten behaftet.

Man könnte auch oder zusätzlich nass laufende Kupplungen verwenden. Da diese einerseits Planschverluste und/oder andererseits mit einer Kupplungskühlung zusammenhängende Pumpverluste erzeugen, sind nass laufende Kupplungen ebenfalls unerwünscht.

Üblicherweise werden für die Bauteile Anpressplatte, Gegenplatte bzw. Gegendruckplatte und, sofern vorhanden, Zwischenanpressplatte Gussbauteile verwendet. Bauteile aus einem Gusswerkstoff sind zuverlässig und wirtschaftlich nur mit einer gewissen Mindestdicke herstellbar. Aktuell liegt diese Grenze für in Serie hergestellte Gussbauteile bei ca. 8 mm Dicke. Unterhalb dieser Grenze stehen einer wirtschaftlichen Herstellung bzw. Fertigung verschiedene Faktoren, etwa teure Herstellungsverfahren, wie ein horizontales Gießen oder ein Kokillenguss statt eines vertikalen Gießens in Sandformen, oder ein hoher Zerspanungsaufwand, wobei ein Gussteil nachträglich auf ein geringeres Maß bzw. axiales Maß zerspant wird, entgegen. Jedoch sind einerseits die Kosten bei der Serienfertigung von Teilen zum Kraftfahrzeugbau gering zu halten oder zu verringern, und ist andererseits eine bauraumliche Ersparnis und/oder eine Ersparnis beim Gewicht anzustreben.

Schaltbare reibschlüssig ein Drehmoment übertragende Kupplungen im Kraftfahrzeugbau sind im Allgemeinen hohen thermischen Beanspruchungen ausgesetzt, etwa bei rasch aufeinanderfolgenden Anfahrvorgängen, die fachsprachlich als "stop and go" bezeichnet werden. Daher sind Kupplungen mit einer hohen oder zumindest nicht verringerten thermischen Robustheit wünschenswert.

Die vorliegende Erfindung hat die Aufgabe, die aus dem Stand der Technik bekannten Nachteile zu beheben. Insbesondere soll eine Kupplung mit einer Eignung zur Verwendung als Doppelkupplung, mit einer geringen Empfindlichkeit oder Neigung zum Rupfen, mit einer hohen Kapazität zum Übertragen von Drehmoment, mit einer geringen Massenträgheit, mit einem geringen axialen Bauraum und/oder mit einer hohen thermischen Belastbarkeit vorgesehen werden. Besonders wünschenswert ist ein zum Übertragen von mindestens 250 Nm geeignetes Doppelkupplungssystem mit einem optimierten Rupf- und Momentenschwankungsverhalten.

Die Aufgabe der Erfindung wird bei einer gattungsgemäßen Kupplung erfindungsgemäß dadurch gelöst, dass zwischen der Anpressplatte und der Gegendruckplatte wenigstens zwei Kupplungsscheiben und eine zwischen diesen einklemmbare Zwischenanpressplatte angeordnet sind, wobei zumindest eines der Bauteile Anpressplatte, Zwischenanpressplatte und Gegendruckplatte als Blechplatte ausgebildet ist.

Die Blechplatte kann auch als Blechstanzplatte, Blechstanzdruckplatte oder Blechbauteil bezeichnet werden. Sie kann in einem spanlosen Verfahren fallend hergestellt werden. Sie ist spanlos, druckumgeformt, biegend, schneidend und/oder gewalzt gefertigt, insbesondere unterschiedlich zu Gussmaterial beschaffen.

Indem zumindest eines der Bauteile Anpressplatte, Zwischenanpressplatte und Gegendruckplatte als Blech(stanzdruck)platte ausgebildet ist, wird axialer Bauraum eingespart, so dass bauraumneutral eine zweite Kupplungsscheibe axial anordenbar ist, so dass sich gegenüber einer Kupplung mit nur einer Kupplungsscheibe bei gleicher Anpresskraft das übertragbare Drehmoment nahezu verdoppelt. Dies hat zur Folge, dass im Vergleich mit einer Kupplung mit nur einer Kupplungsscheibe Bauraum und/oder Gewicht eingespart werden kann.

Vorteilhafte Ausführungsformen sind in den Unteransprüchen beansprucht und werden nachfolgend erläutert. Die dort genannten Aspekte können auch einzeln, unabhängig voneinander und vom Hauptaspekt weiterverfolgt werden.

So ist es von Vorteil, wenn an einer der Kupplungsscheiben ein, mit einer weiteren Kupplungsscheibe wirkverbundener und zum Drehmomentweitergeben an eine Abtriebswelle eingerichteter Träger angebracht ist, da dann das Drehmoment effizient weitergegeben werden kann.

Um eine gute Anlage zu erreichen, ist es zweckmäßig, wenn die Kupplungsscheibe einen Reibbelag aufweist, wobei zwischen dem Reibbelag und dem Träger eine in Axialrichtung vorspannende Feder angeordnet ist.

Der Bauraum ist besonders gering, wenn an nur einer Kupplungsscheibe zwischen der Anpressplatte und der Gegendruckplatte eine einzige in Axialrichtung vorspannende Feder vorhanden ist.

Um möglichst vielseitige Anwendungen zu ermöglichen, ist es wünschenswert die Kupplung als Teilkupplung einer Doppelkupplung mit zwei Getriebeeingangswellen oder als Einfachkupplung mit nur einer Getriebeeingangswelle auszuführen.

Ein vorteilhaftes Ausführungsbeispiel ist auch dadurch gekennzeichnet, dass das Kupplungsbetätigungsorgan axial und/oder radial an einer Getriebeeingangswelle (wälz-)gelagert ist.

Es ist von Vorteil, wenn sich die Gegendruckplatte auf derselben Getriebeeingangswelle wie das Kupplungsbetätigungsorgan axial und/oder radial abgestützt.

Auch ist es wünschenswert, wenn der Träger der einen der zumindest zwei Kupplungsscheiben in Umfangsrichtung die andere Kupplungsscheibe zum Aufnehmen des jeweiligen Kupplungsdrehmoments lagert.

Damit eine gute Drehmomentweitergabe und Führung der Einzelkomponenten möglich ist, ist es vorteilhaft, wenn eine der Kupplungsscheiben eine Eingriffskontur aufweist, in welche zum Übertragen von Drehmoment zumindest eine andere Kupplungsscheibe axial verlagerbar eingreift.

Es kann ferner vorgesehen sein, dass an einer der Kupplungsscheiben ein, zum Drehmomentweitergeben an eine Abtriebswelle und/oder Führen wenigstens einer Zwischenanpressplatte eingerichteter Träger festgelegt ist. Dadurch kann ein günstiger Kraftfluss erreicht werden.

Erfindungsgemäß ist auf einer oder beiden Seiten einer Kupplungsscheibe / einer Belagsgrundscheibe, die an dem Träger angebracht ist, ein Reibbelag angebunden. Durch Vorsehen eines Reibbelages kann ein Verschleiß in der Kupplung und/oder ein thermischer Energieeintrag beim Kupplungsschließen verringert werden. Durch Vorsehen nur eines Reibbelags kann axialer Bauraum eingespart werden.

Wenn zwischen nur einem der Reibbeläge und dem Träger eine in Axialrichtung vorspannende Feder angeordnet ist, kann axialer Bauraum eingespart werden. Insbesondere bei Verwenden des steifen Drucktopfes zum Betätigen der Kupplung kann auf eine Tellerfeder verzichtet werden, so dass bei Verwenden des steifen Drucktopfes nur eine in Axialrichtung vorspannende Feder geometrische Fehler hinreichend ausgleichen kann. Dies spart nochmals axialen Bauraum. Es ergänzen sich also Synergie-artig eine bauraumliche Ersparnis und ein verbessertes Rupf-Verhalten.

Wenn zwischen beiden Reibbelägen und dem Träger jeweils eine in Axialrichtung vorspannende Feder angeordnet ist, kann der jeweilige Federweg beispielsweise deutlich reduziert werden, so dass eine bauraumliche Ersparnis und/oder eine schneller schaltende bzw. schneller ein- und/oder ausschaltbare Kupplung erreicht wird.

Wenn zwischen nur einem Reibbelag und dem Träger eine in Axialrichtung vorspannende Feder angeordnet ist oder zwischen beiden Reibbelägen und dem Träger jeweils eine in Axialrichtung vorspannende Feder angeordnet ist, können die voranstehend genannten Vorteile genutzt werden.

Es ist besonders bevorzugt, wenn zwischen der Anpressplatte und der Gegendruckplatte an nur einer Kupplungsscheibe eine in Axialrichtung vorspannende Feder eingesetzt ist, da dies wegen der reduzierten Zahl an Bauteilen beispielsweise die Lagerhaltungskosten und die Montagekosten reduziert. Ferner kann so der Betätigungsweg beim Einschalten der Kupplung verringert werden, so dass nicht nur axialer Bauraum gespart werden kann, sondern dass auch der Schlupf und damit die Zeit bis zum Reibschluss einen thermischen Energieeintrag einsparend verkürzbar ist.

Es ist zweckmäßig, wenn die Kupplung als Doppelkupplung mit zwei Getriebeeingangswellen oder als Einfachkupplung (d.h.) mit nur einer Getriebeeingangswelle ausgeführt ist. Ferner kann die erfindungsgemäße Kupplung insbesondere eine Teilkupplung einer Doppelkupplung sein. Einfachkupplungen sind besonders kostengünstig. Doppelkupplungen sind ohne Zugkraftunterbrechung schaltbar, so dass allgemein eine Fahrdynamik verbessert sein kann.

Ein vorteilhaftes Ausführungsbeispiel ist dadurch gekennzeichnet, dass das Kupplungsbetätigungsorgan axial und/oder radial an einer Getriebeeingangswelle, bevorzugt über ein Wälzlager oder Gleitlager, oder direkt an einem Getriebeboden, gelagert ist.

Wenn das Kupplungsbetätigungsorgan zum axialen und/oder radialen Abgestützt-Werden an einer Getriebeeingangswelle vorbereitet ist, kann eine beim Betätigen der Kupplung auftretende Axialkraft auf konstruktiv engem Raum aufgefangen bzw. gelagert werden, so dass mit der Folge eines geringen Systemgewichts für die dafür benötigte Festigkeit nur wenig Material vorzusehen ist.

Wenn das Kupplungsbetätigungsorgan zum axialen und/oder radialen Abgestützt-Werden an einer Kupplungsglockenwand, wie einem Getriebeboden, vorbereitet ist, wird eine Montage, auch bei einem Kupplungsscheibenwechsel, besonders vereinfacht und günstiger.

Zum Abstützen des Kupplungsbetätigers soll insbesondere ein Wälzlager oder ein Gleitlager, besonders bevorzugt ein Schrägkugellager, angeordnet und ausgestaltet werden. Wälzlager sind besonders gut mit Schmiermittel zu versorgen und gegenüber im Antriebsstrang eines Kraftfahrzeugs auftretende Temperaturen besonders haltbar. Gleitlager sind besonders klein und leicht. Schrägkugellager sind besonders gut dazu geeignet, Stückzahlen und damit Kosten einzusparen.

Wenn die Gegendruckplatte zum axialen und/oder radialen Abgestützt-Werden an einer Welle, wie einer Kurbelwelle oder einer Getriebeeingangswelle, vorbereitet ist, können die Kräfte zum Betätigen der Kupplung besonders gut abgeleitet werden. Ferner begünstigt dies eine geringe Neigung zum Rupfen wegen der besonders hohen Konzentrizität.

Zum Abstützen der Gegendruckplatte ist es besonders bevorzugt, wenn ein Wälzlager oder ein Gleitlager, insbesondere ein Schrägkugellager angeordnet und ausgestaltet ist, wobei auf die vorangehend genannten Vorteile verwiesen wird.

Wenn der Träger der einen der zumindest zwei Kupplungsscheiben in Umfangsrichtung die andere Kupplungsscheibe oder die anderen Kupplungsscheiben zum Aufnehmen des jeweiligen Kupplungsdrehmoments lagert, kann vorteilhafterweise nur ein Träger zum Übertragen des Kupplungsdrehmoments auf die zugeordnete Welle, wie eine Getriebeeingangswelle oder eine Kurbelwelle, vorbereitet sein. Dies spart Kosten und Gewicht. Insbesondere kann der Träger zum Übertragen des Kupplungsdrehmoments auf die zugeordnete Welle drehfest und axialbeweglich an der zugeordneten Welle gelagert sein, so dass eine Verlagerbarkeit der Kupplungsscheiben zum Schließen und/oder Öffnen der Kupplung nicht durch die Lagerung des Trägers an der zugeordneten Welle behindert ist, so dass ein kleinerer und leichterer Kupplungsbetätiger verwendet werden kann. Dies reduziert wegen der kleineren gesamten Massenträgheit dieser Kupplungsscheiben das Massenträgheitsmoment der Getriebeeingangswelle, so dass bspw. eine Synchronisierung in einem Getriebe geringer und damit leichter und billiger dimensioniert werden kann.

Wenn eine der zumindest zwei Kupplungsscheiben eine Eingriffskontur aufweist, in welche die andere oder eine andere oder die anderen der zumindest zwei Kupplungsscheiben axial verlagerbar zum Drehmoment-Übertragen eingreift, ist ein Schließen und/oder Öffnen der Kupplung besonders einfach zu realisieren. Dies spart Kosten.

Ein vorteilhaftes Ausführungsbeispiel ist dadurch gekennzeichnet, dass eine gegendruckplattenfeste Führung die Anpressplatte und die Zwischenanpressplatte in Umfangsrichtung und axial verlagerbar zum Drehmoment-Übertragen lagert, und/oder zwischen der Führung und der Zwischenanpressplatte ein Federelement angeordnet ist.

Wenn eine gegendruckplattenfeste Führung die Anpressplatte in Umfangsrichtung und axial verlagerbar zum Übertragen eines Drehmoments lagert, kann die andere Platte besonders stabil an die Gegendruckplatte angebunden werden, so dass verhältnismäßig hohe Drehmomente übertragbar sind.

Dabei ist es besonders bevorzugt, wenn die Kupplung vorzugsweise eine axial zwischen den Kupplungsscheiben angeordnete, an der Führung in Umfangsrichtung und axial verlagerbar gelagerte Zwischenanpressplatte aufweist. Neben den voranstehend genannten Vorteilen zur Lagerung der Anpressplatte an der Gegendruckplatte kommen hier kostensparende Gleichteil-Effekte zum Tragen.

Es wird, mit anderen Worten, die Verwendung von aus Blech gestanzten Druckplatten vorgeschlagen, um einen einfachen Aufbau einer direkt betätigten Kupplung oder Doppelkupplung zu ermöglichen, und gleichzeitig das Massenträgheitsmoment der Kupplung zu verringern, wobei vorteilhafterweise eine bessere Fahrdynamik oder ein wirtschaftlicherer Treibstoffverbrauch, vorzugsweise beides, erreicht wird. Es werden ferner mehrere Kupplungsscheiben pro Kupplung oder Teilkupplung vorgeschlagen, so dass die Wärme besser verteilt wird. Hierdurch stellen sich, als Synergieeffekte, auch eine erhöhte Drehmomentkapazität und ein geringerer axialer Aufbau bzw. Bauraumbedarf der Kupplung ein. Es soll ferner mit bedacht sein, dass zumindest eine oder nur eine Teilkupplung zwei Kupplungsscheiben aufweisen kann.

Die Erfindung betrifft auch eine Doppelkupplung mit zwei Teilkupplungen gemäß der erfindurgsgemäßen Kupplung, wobei vorteilhafterweise zwei Anpressplatten, zwei Gegendruckplatten und zwei Zwischenanpressplatten vorhanden sind und weiter vorzugsweise alle aus Blech gefertigt sind.

Die folgenden Aspekte, welche durch die voranstehende und/oder danach folgende Beschreibung näher präzisiert werden, sollen auch unabhängig beanspruchbar sein. So kann ein Kupplungsbetätiger, wie bspw. ein konzentrischer Nehmerzylinder, an einem Getriebegehäuse, wie einem Getriebeboden, an einer Getriebeeingangswelle, an einem Kupplungsgehäuse, wie einer Kupplungsglocke, und/oder an einem eine Verbrennungskraftmaschine mit einem getriebeverbindenden Gehäuse befestigbar, abstützbar und/oder lagerbar sein. Die Gegenplatte bzw. Gegendruckplatte kann so ausgestaltet und angeordnet, etwa abgestützt und/oder gelagert, sein, dass diese die Klemmkräfte und/oder Betätigungskräfte aufnimmt. Insbesondere kann die Gegendruckplatte an einer Kupplungseingangswelle in axialer Richtung und/oder radialer Richtung gelagert sein. Eine Zwischenanpressplatte kann insbesondere zwischen zwei Kupplungsscheiben der Kupplung oder einer selben Teilkupplung angeordnet vorgesehen sein. Die Anpressplatte und eine Zwischenanpressplatte können über elastische Elemente, wie Federelemente, insbesondere wie Blattfederelemente, axial verlagerbar bzw. verschiebbar verbunden sein. Reibscheiben und/oder Kupplungsscheiben können an einer Nabe angebunden sein. Insbesondere kann vorgesehen sein, dass nur eine der Reibscheiben bzw. Kupplungsscheiben der Kupplung oder einer Teilkupplung mit einer zugehörigen Welle, wie einer Getriebeeingangswelle verbindbar, wie drehfest verbindbar oder axial verlagerbar und drehfest verbindbar angeordnet und ausgestaltet sein. Es kann insbesondere vorgesehen sein, dass zumindest zwei Kupplungsscheiben der Kupplung oder einer Teilkupplung miteinander drehfest oder drehfest und axial verlagerbar verbunden sind, und diese Verbindung dann drehfest oder drehfest und axial verlagerbar mit einer zugehörigen Welle, wie einer Getriebeeingangswelle, verbindbar vorgesehen ist. Bei der Kupplung oder einer Teilkupplung kann eine Belagfederung, zumindest eine Belagfederung und/oder jeweils eine Belagfederung vorgesehen sein. Insbesondere wird vorgeschlagen, dass nur eine Reibscheibe pro Teilkupplung eine Belagfederung aufweist und die bzw. eine andere Reibscheibe explizit keine Belagfederung aufweist, wodurch ein bauraumlicher Vorteil und gesenkte Kosten erreicht werden können. Als Belagfederung kann sowohl ein separates Bauteil wie auch eine abschnittsweise Ausgestaltung eines Trägers oder Belagträgers vorgesehen werden und/oder vorbereitet sein. Es kann alternativ oder zusätzlich ein Federelement zwischen zwei Anpressplatten oder zwischen einer Anpressplatte und einer Zwischenanpressplatte ausgestaltet und angeordnet sein. Es kann alternativ oder zusätzlich ein Federelement zwischen zwei Anpressplatten oder zwischen einer Anpressplatte und einer Zwischenanpressplatte beabstandend wirkend ausgestaltet und angeordnet sein. Eine Zwischenanpressplatte kann als eine Anpressplatte bezeichnet werden. Es kann ferner vorgesehen sein, dass ein Anpressplattenträger, der auch als eine Nabe oder ein Anpressplattentragabschnitt bezeichnet sein kann, einstückig oder mehrstückig an der Gegendruckplatte, insbesondere mit einer Verzahnung zum Übertragen eines Drehmoments, angeordnet ausgestaltet ist. Die Verzahnung des Anpressplattenträgers oder des Anpressplattentragabschnitts kann so angeordnet und ausgebildet sein, dass die Anpressplatte und/oder Zwischenanpressplatte drehfest und/oder axial verlagerbar oder axial begrenzt verlagerbar gelagert ist.

Ferner können auch ein im Folgenden vorgestelltes Sechsplattendesign und/oder ein im Folgenden vorgestelltes Achtplattendesign unabhängig beansprucht werden. Bei dem Sechsplattendesign ist die Kupplung oder eine Teilkupplung der Doppelkupplung so ausgestaltet, dass die Gegendruckplatte, die Anpressplatte und eine Zwischenanpressplatte als Stanzbauteil, als Umformbauteil, als Stanz- und -Umform-Bauteil und/oder als Blechbauteil ausgebildet sind. Bei dem Achtplattendesign ist die Kupplung und/oder eine Teilkupplung der Doppelkupplung so ausgestaltet, dass die Gegendruckplatte, zwei Zwischenanpressplatten und die Anpressplatte als Stanzbauteil, als Umformbauteil, als Stanz- und -Umform-Bauteil und/oder als Blechbauteil ausgebildet sind.

Die Erfindung wird nachfolgend mit Hilfe dreier Ausführungsformen und deren Modifikationen näher beschrieben. Es zeigen:
- Fig. 1: eine entlang einer Längsachse geschnittene Darstellung einer als Doppelkupplung ausgeführten Kupplung gemäß einer ersten Ausführungsform der Erfindung,
- Fig. 2: eine entlang der Längsachse geschnittene Darstellung der Kupplung aus Fig. 1, wobei eine Betätigung einer ersten Teilkupplung der Doppelkupplung verdeutlicht wird,
- Fig. 3: eine entlang der Längsachse geschnittene Darstellung der Kupplung der Fig. 1, wobei eine Betätigung einer zweiten Teilkupplung der Doppelkupplung verdeutlicht wird,
- Fig. 4: eine entlang einer Längsachse geschnittene Darstellung einer Kupplung gemäß einer ersten Modifikation der ersten Ausführungsform,
- Fig. 5: in perspektivischer Darstellung eine zweite Modifikation der ersten Ausführungsform, und
- Fig. 6: eine entlang einer Längsachse geschnittene Darstellung einer als Doppelkupplung ausgeführten Kupplung gemäß einer zweiten Ausführungsform der Erfindung.

Die Figuren sind lediglich schematischer Natur und dienen nur dem Verständnis der Erfindung. Gleiche bzw. vergleichbare Elemente sind mit denselben Bezugszeichen versehen und werden nicht erneut beschreiben. Die Elemente der einen Ausführungsform sind auch bei den anderen Ausführungsformen anwendbar, sie sind also untereinander austauschbar.

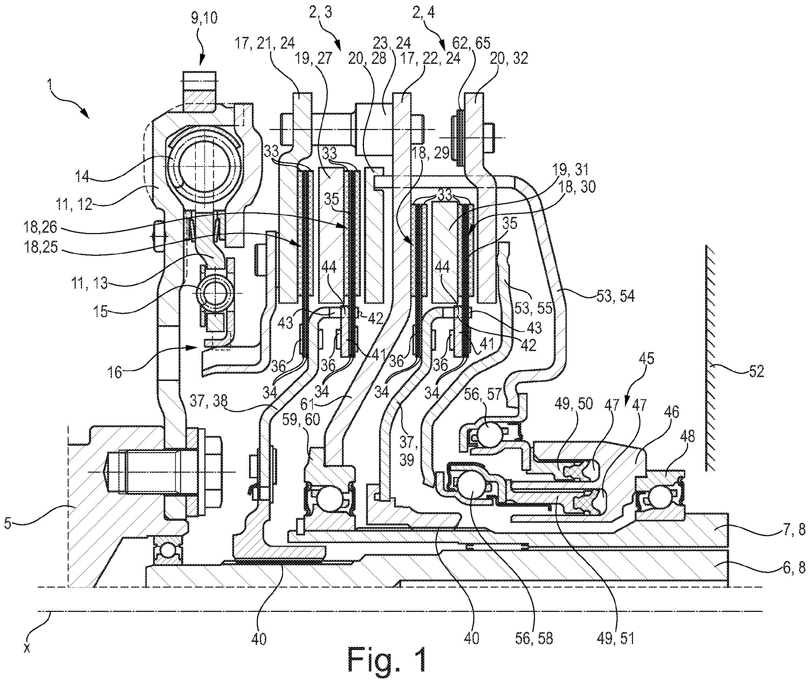

Die Fig. 1 zeigt eine entlang einer Längsachse bzw. Rotationsachse X geschnittene Darstellung einer Kupplung 1, welche als Doppelkupplung mit zwei normalerweise geöffneten bzw. selbstöffnenden Teilkupplungen 2, nämlich einer ersten Teilkupplung 3 und einer zweiten Teilkupplung 4 ausgestaltet ist. Durch Schließen bzw. Betätigen der ersten Teilkupplung 3 kann eine Kurbelwelle 5 einer nicht dargestellten Verbrennungskraftmaschine zum Übertragen einer Leistung bzw. zum Leistung-Übertragen mit einer ersten oder inneren Getriebeeingangswelle 6 gekoppelt werden, und durch Schließen bzw. Betätigen der zweiten Teilkupplung 4 kann die Kurbelwelle 5 zum Übertragen einer Leistung mit einer zweiten oder äußeren Getriebeeingangswelle 7 gekoppelt werden. Die erste Getriebeeingangswelle 6 und die zweite Getriebeeingangswelle 7 können auch allgemein als eine Getriebeeingangswelle 8 bezeichnet sein. Die zweite Getriebeeingangswelle 7 ist eine Hohlwelle und umfängt die erste Getriebeeingangswelle 6. Die erste Getriebeeingangswelle 6 kann zur Gewichtsersparnis ebenfalls als Hohlwelle ausgeführt sein.

Die Kurbelwelle 5 ist mit einer Schwungradbaugruppe 9 verbunden. Die Schwungradbaugruppe 9 ist als Zweimassen-Schwungrad 10 mit zwei Schwungrädern 11, nämlich einem Primärschwungrad 12 und einem Sekundärschwungrad 13, ausgebildet. Die Schwungräder 11 sind in Umfangsrichtung um die Längsachse X relativ zueinander verschwenkbar über eine Spiralfeder 14 gekoppelt. Die Spiralfeder 14 wird auch als Torsionsdämpfer bezeichnet. Das Sekundärschwungrad 13 ist über ein Versatzausgleichselement 15 zum Kompensieren bzw. Ausgleichen von Versatzfehlern zwischen der Kurbelwelle 5 und den Getriebeeingangswellen 8 versehen. Abtriebsseitig an dem Versatzausgleichselement 15 ist eine Steckverzahnung 16 zum Übertragen von Drehmoment zwischen der Schwungradbaugruppe 9 und den Teilkupplungen 2 vorgesehen. Die Steckverzahnung 16 ist vorzugsweise axial, radial und/oder in Umfangsrichtung vorgespannt.

Die beiden Teilkupplungen 2 haben jeweils eine Gegendruckplatte 17, jeweils zwei Kupplungsscheiben 18, jeweils eine Zwischenanpressplatte 19 und jeweils eine Anpressplatte 20. Die beiden Gegendruckplatten 17, nämlich eine erste Gegendruckplatte 21 der ersten Teilkupplung 3 und eine zweite Gegendruckplatte 22 der zweiten Teilkupplung 4 sind miteinander fest über eine Vielzahl an Bolzen 23 verbunden. Die Bolzen 23 sind vorzugsweise als Stufenbolzen ausgeführt, alternativ können aber Niete, Schrauben, Stifte, Schweißstellen, Verstemmungen oder klemmende oder fixierende Umbiegungen verwandt werden. Die beiden Gegendruckplatten 21, 22 sind bei der ersten Ausführungsform wegen der festen Verbindung derselben als eine gemeinsame Gegendruckplatte 24 ausgebildet. Die gemeinsame Gegendruckplatte 24 und das Sekundärschwungrad 13 bilden zusammen die Sekundärmasse des Zweimassen-Schwungrads 10.

Die beiden Kupplungsscheiben 18 der ersten Teilkupplung 3 sind eine erste Kupplungsscheibe 25 und eine zweite Kupplungsscheibe 26. Zwischen der ersten Kupplungsscheibe 25 und der zweiten Kupplungsscheibe 26 ist in Axialrichtung eine erste Zwischenanpressplatte 27 der ersten Teilkupplung 3 angeordnet, und diese sind in Axialrichtung zwischen der ersten Gegendruckplatte 21 und einer ersten Anpressplatte 28 der ersten Teilkupplung 3 zum Geklemmt-Werden axial verlagerbar ausgebildet und angeordnet. Die zweite Teilkupplung 4 ist in vergleichbarer Weise mit einer dritten Kupplungsscheibe 29, einer vierten Kupplungsscheibe 30, einer zweiten Zwischenanpressplatte 31 und einer zweiten Anpressplatte 32 versehen. Die Kupplung 1 kann als direkt betätigte Mehrscheibenkupplung bezeichnet werden.

Bei der ersten Ausführungsform ist jede Kupplungsscheibe 18 axial beidseitig mit Reibbelägen 33, die an einer oder jeweils einer Belagsgrundscheibe 34 befestigt sind, versehen. Die Belagsgrundscheibe 34 kann auch als Belagsträger oder dergleichen bezeichnet sein. Jeweils eine der Kupplungsscheiben 18 der Teilkupplungen 2, nämlich bspw. die zweite Kupplungsscheibe 26 und die vierte Kupplungsscheibe 30 sind vorliegend mit einer Belagsfeder 35 als eine Belagsfederung versehen. Ferner ist jeweils eine der Kupplungsscheiben 18 mittels eines Niets 36 oder einer Vielzahl an Nieten 36 an einem Kupplungsträger 37 befestigt, nämlich ist die erste Kupplungsscheibe 25 an dem ersten Kupplungsträger 38 und die dritte Kupplungsscheibe 29 an dem zweiten Kupplungsträger 39 befestigt. Die Kupplungsträger 37 sind zum Übertragen eines Kupplungsdrehmoments zwischen der jeweiligen Teilkupplung 2 und der jeweiligen Getriebeeingangswelle 8 mittels bspw. einer Keilwellenverzahnung 40 drehfest und axial verlagerbar an der jeweiligen Getriebeeingangswelle 8 gelagert. Die Kupplungsträger 37 können auch als Träger, Nabenteile oder Mitnehmerscheiben bezeichnet und ausgestaltet sein.

Die Belagsgrundscheiben 34 der anderen Kupplungsscheiben 18, nämlich der zweiten Kupplungsscheibe 26 und der vierten Kupplungsscheibe 30, sind jeweils an einem Haltebauteil 41 mittels eines Niets 36 oder einer Vielzahl an Nieten 36 befestigt. Bei der ersten Ausführungsform ist an dem jeweiligen Haltebauteil 41 eine Eingriffskontur 42 vorgesehen. Die Eingriffskontur 42 ist derart ausgebildet, dass eine an dem jeweiligen Kupplungsträger 37 ausgebildete Eingreifkontur 43 zum Übertragen eines Drehmoments eingreift. Die Eingriffskontur 42 und die Eingreifkontur 43 sind eine axiale zumindest begrenzte Verlagerung des jeweiligen Haltebauteils 41 zu dem jeweiligen Kupplungsträger 37 ermöglichend ausgestaltet und angeordnet. Man kann die Eingriffskontur 42 als eine weibliche Kontur und die Eingreifkontur 43 als eine männliche Kontur bezeichnen. Beispielhaft sind die Eingriffskontur 42 und die Eingreifkontur 43 nach Art einer Verzahnung 44, wie einer Steckverzahnung, ausgebildet. Die Eingriffskontur 42 kann als ein Durchgangsloch oder eine Vielzahl an Durchgangslöchern gebildet sein, und die Eingreifkontur 43 kann als Durchgangslochgegengleiche Auskragung oder eine Vielzahl davon gebildet sein. Die Eingreifkontur 43 ist beispielhaft einstückig umgeformt an dem Kupplungsträger 37 gebildet, und sie steht von diesem axial L-förmig ab. Das Haltebauteil 41 kann auch als Verzahnungsblech bezeichnet werden. Die Eingriffskontur 42 kann auch als Verzahnungskontur bezeichnet werden. Die Eingreifkontur 43 kann auch als Gegenverzahnung bezeichnet werden. Das Kupplungsdrehmoment kann bei mindestens einer der Teilkupplungen 2 über mindestens zwei Kupplungsscheiben 18, die auch als Reibscheiben bezeichnet werden können, in die jeweilige Getriebeeingangswelle 8 eingeleitet werden.

Die Kupplung 1 weist einen Kupplungsbetätiger 45 auf, der einen konzentrischen Nehmerzylinder 46 mit zwei zylindrisch um die Längsachse X herum gebildeten Zylinderkammern 47 beinhaltet. In jeder der hohlzylindrischen Zylinderkammern 47 läuft ein hohlzylindrisch oder ringartig um die Längsachse X herum gebildeter Kolben 49, von denen ein erster Kolben 50 der ersten Teilkupplung 3 und ein zweiter Kolben 51 der zweiten Teilkupplung 4 zugeordnet ist. Die Ausgestaltung des Kupplungsbetätigers 45 als konzentrischer Nehmerzylinder 46 stellt dabei nur eine lediglich bevorzugte Gestaltung dar. Der Kupplungsbetätiger 45 ist über ein Kupplungsbetätigerlager 48, vorzugsweise ein Schrägkugellager, an der zweiten Getriebeeingangswelle 7 gelagert. Der Kupplungsbetätiger 45 kann alternativ oder zusätzlich an einem feststehenden Gehäuseteil, wie einer Getriebebodenwand 52, befestigt sein, etwa auch nach Art einer Drehmomentstütze.

Jede der Teilkupplungen 2 hat ferner einen Drucktopf 53, der zum Übertragen von Betätigungskräften zwischen der jeweiligen Anpressplatte 20 und dem jeweiligen Kolben 49 vorbereitet, angeordnet und ausgestaltet ist. Die Drucktöpfe 53 sind im Wesentlichen steife Bauteile. Wegen der Steifigkeit der Drucktöpfe 53 und wegen des Verzichts auf eine Hebefeder oder Tellerfeder kann die Kupplung 1 als eine direkt betätigte Kupplung bezeichnet werden.

Genauer gesagt hat die erste Teilkupplung 3 einen ersten Drucktopf 54, der an der ersten Anpressplatte 28 zum Ausüben einer Betätigungskraft angreift. Der erste Drucktopf 54 ist zum Betätigt-Werden durch den ersten Kolben 50, etwa über ein Drucktopflager 56, wie ein Schrägkugellager 57, ausgestaltet und vorbereitet. Gleichermaßen hat die zweite Teilkupplung 4 einen zweiten Drucktopf 55, der an der zweiten Anpressplatte 32 zum Ausüben einer Betätigungskraft angreift. Der zweite Drucktopf 55 ist zum Betätigt-Werden durch den zweiten Kolben 51, etwa über ein Drucktopflager 56, wie ein Schrägkugellager 58, vorbereitet und ausgestaltet. Das Schrägkugellager 57 kann auch als erstes Drucktopflager bezeichnet werden, und das Schrägkugellager 58 kann auch als zweites Drucktopflager bezeichnet werden.

Die gemeinsame Gegendruckplatte 24 ist über ein Druckplattenlager 59, das bevorzugt als Schrägkugellager 60 ausgebildet ist, an der zweiten Getriebeeingangswelle 7 gelagert. Genauer gesagt, das Druckplattenlager 59 ist an einem Nabenabschnitt 61 der zweiten Gegendruckplatte 22 abgestützt. Das Druckplattenlager 59 wird auch als zentrales Wälzlager bezeichnet.

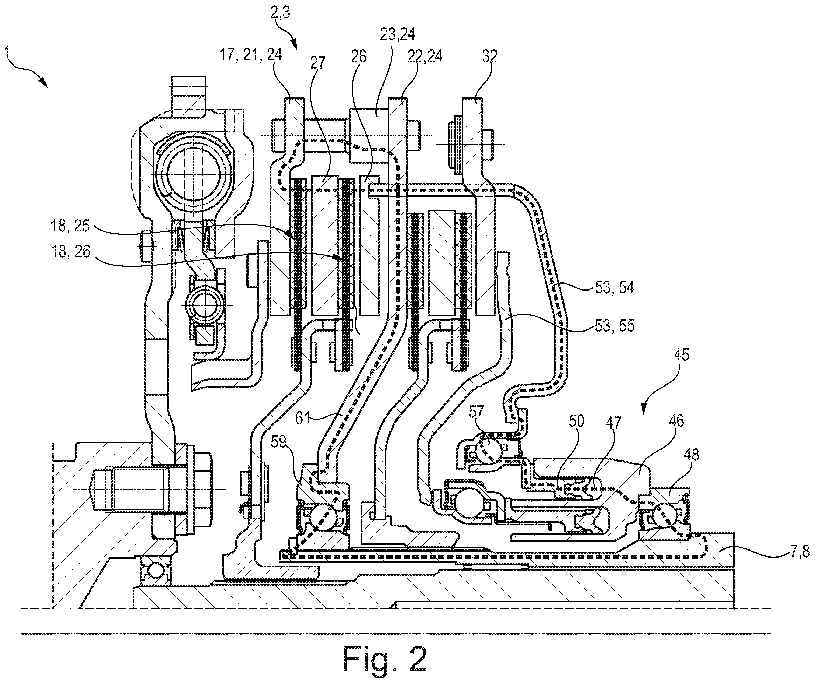

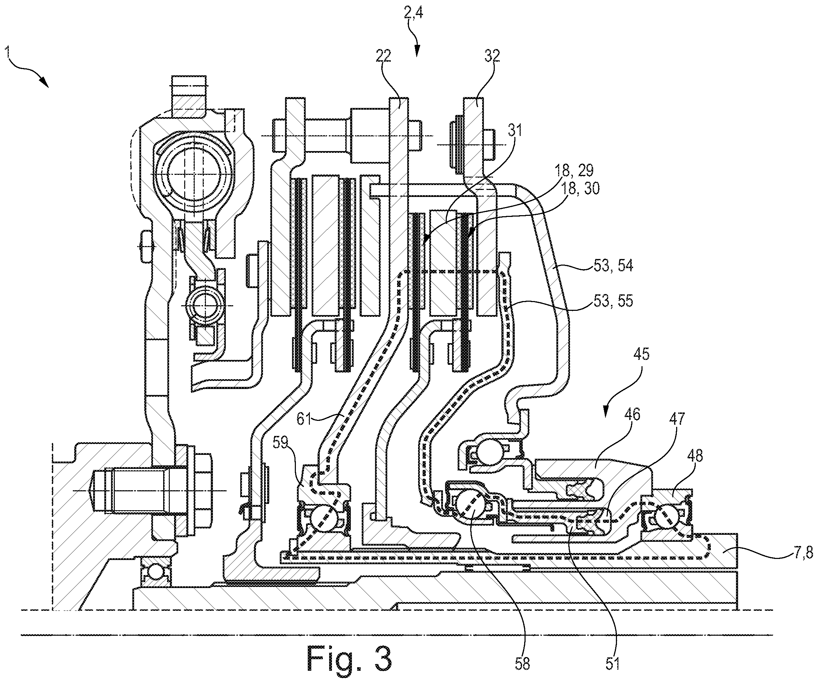

Anhand der Figuren Fig. 2 und Fig. 3 wird im Folgenden eine Betätigung der Kupplung 1 genauer beschrieben.

Die Fig. 2 zeigt dabei im Wesentlichen die Darstellung der Fig. 1, wobei ein Kraftfluss durch eine dicke, gestrichelte Linie dargestellt ist. Da der Kupplungsbetätiger 45 sowohl an der zweiten Getriebeeingangswelle 7 wie auch an den Drucktöpfen 53 über Wälzlager, nämlich die Schrägkugellager 48, 57 und 58, gelagert ist, kann der Kupplungsbetätiger 45 mit einer Energiequelle (nicht dargestellt), wie einem Geberzylinder oder dergleichen, ohne Vorsehen einer Drehdurchführung oder derartigem zum Übertragen einer Betätigungsenergie verbunden werden.

Wird eine der ersten Teilkupplung 3 zugeordnete Zylinderkammer 47 der Zylinderkammern 47 mit hydraulischem Druck beaufschlagt, wird der erste Kolben 50 axial in einer Kupplungsschließrichtung verlagert. Über das Schrägkugellager 57 übt der erste Kolben 50 eine Druckkraft zum Schließen der ersten Teilkupplung 3 auf den ersten Drucktopf 54 aus. Der erste Drucktopf 54 durchgreift die zweite Anpressplatte 32 und die zweite Gegendruckplatte 22 in einer zum Betätigen der ersten Teilkupplung 3 geeigneten Weise, und er drückt die erste Anpressplatte 28 zu der ersten Gegendruckplatte 21 in einer die zweite Kupplungsscheibe 26, die erste Zwischenanpressplatte 27 und die erste Kupplungsscheibe 25 zum reibschlüssigen Übertragen eines Drehmoments klemmenden Weise. Die auf die erste Gegendruckplatte 21 übertragene Drucckraft wird über den Bolzen 23 auf die zweite Gegendruckplatte 22 übertragen. Diese Druckkraft wird von der zweiten Gegendruckplatte 22 über den Nabenabschnitt 61 auf das Druckplattenlager 59 übertragen. Das Druckplattenlager 59 ist in Axialrichtung fest mit der zweiten Getriebeeingangswelle 7 verbunden, so dass die Druckkraft von dem Druckplattenlager 59 über die zweite Getriebeeingangswelle 7 und das Schrägkugellager 48 wieder auf den Kupplungsbetätiger 45 übertragen wird. Der Kraftfluss ist somit geschlossen. Insbesondere ist der Kraftfluss zum Schließen der ersten Teilkupplung 3 in vorteilhafter Weise innerhalb nur der Kupplung 1 sowie einem Abschnitt der zweiten Getriebeeingangswelle 7 geführt.

Die Fig. 3 zeigt dabei im Wesentlichen die Darstellung der Fign. 1 und 2, wobei ein Kraftfluss durch eine dicke, gestrichelte Linie dargestellt ist. Wird eine der zweiten Teilkupplung 4 zugeordnete Zylinderkammer 47 der Zylinderkammern 47 mit hydraulischem Druck beaufschlagt, wird der zweite Kolben 51 axial in einer Kupplungsschließrichtung verlagert. Über das Schrägkugellager 58 übt der zweite Kolben 51 eine Druckkraft zum Schließen der zweiten Teilkupplung 4 auf den zweiten Drucktopf 55 aus. Der zweite Drucktopf 55 drückt die zweite Anpressplatte 32 zu der zweiten Gegendruckplatte 22 in einer die vierte Kupplungsscheibe 30, die zweite Zwischenanpressplatte 31 und die dritte Kupplungsscheibe 29 zum reibschlüssigen Übertragen eines Drehmoments klemmenden Weise. Die auf die zweite Gegendruckplatte 22 übertragene Druckkraft wird von dieser über den Nabenabschnitt 61 auf das Druckplattenlager 59 übertragen. Im Übrigen gilt die zu der Fig. 2 gegebene Beschreibung.

Wie sich aus den Darstellungen der Fig. 2 und Fig. 3 ergibt, sind die Schrägkugellager 60, 48 bevorzugt in einer so genannten O-Anordnung zum Ermöglichen des kurzen, geschlossenen Kraftverlaufs angeordnet. Eine X-Anordnung kann ebenfalls vorteilhaft sein. Mit anderen Worten, es ergibt sich als ein besonderer Vorteil dadurch, dass das Druckplattenlager 59 auf derselben Welle wie das Kupplungsbetätigerlager 48 angeordnet ist.

Durch den anhand der Fig. 2 beschriebenen Kraftfluss zum Betätigen der ersten Teilkupplung 3 und den anhand der Fig. 3 beschriebenen Kraftfluss zum Betätigen der zweiten Teilkupplung 4 werden keine Betätigungskräfte bspw. in das Getriebe oder eine Kupplungsglocke eingeleitet. Der Kraftfluss ist also intern geschlossen. Der intern geschlossene Kraftfluss wird insbesondere durch das Kupplungsbetätigerlager 48 ermöglicht.

Gegenüber dem aus der DE 10 2009 048 277 A1 bekannten Stand der Technik unterscheidet sich die Kupplung 1 unter Anderem dadurch, dass die erste Teilkupplung 3 und die zweite Teilkupplung 4 jeweils in derselben Betätigungsrichtung geschlossen und geöffnet werden, so dass bspw. die kosten sparende und eine Herstellung vereinfachende Verwendung von Gleichteilen begünstigt ist.

Die Kupplung 1 ist als ein Sechsplattendesign ausgeführt, wie im Folgenden erläutert wird. Es sind nämlich die Gegendruckplatten 17, die Zwischenanpressplatten 19 und die Anpressplatten 20 aus Blech mittels Stanzschritten und Umformschritten gebildet. Für das Blech wird bevorzugt ein Eisenbasiswerkstoff verwendet. Dadurch wird erreicht, dass die Dicke der Platten nicht vorrangig durch einen Fertigungsprozess, wie ein Gießen, sondern vorrangig durch Festigkeitsanforderungen vorgegeben wird. Diese Ausgestaltung ermöglicht einen axial besonders kurzen Bauraum.

Da bei der Kupplung 1 je Teilkupplung 2 nur eine Kupplungsscheibe bzw. Teilscheibe 18 mit einer Belagfederung, wie der Belagsfeder 35 versehen ist, kann der axiale Bauraum weiter verringert werder.

Die insbesondere beim Schließen der jeweiligen Teilkupplung 2 unter Schlupf entstehende Wärme beim Betätigen der Kupplung 1 wird in den Platten Gegendruckplatten 17, Zwischenanpressplatten 19 und Anpressplatten 20 aufgenommen und zwischengespeichert. Da diese Platten aus Blech und dünner als Platten aus Gusswerkstoff gefertigt sind, kann in vorteilhafter Weise bei vergleichbarer thermischer Masse, vergleichbarer thermischer Robustheit und/oder vergleichbarer spezifischer Wärmekapazität, wie voranstehend beschrieben ist, die axiale Baugröße der Kupplung 1 mit Blechplatten im Vergleich zu einer nicht dargestellten Kupplung mit Gussplatten verkürzt werden. Diese Verkürzung des axialen Bauraums wirkt sich mit zunehmender Plattenanzahl, insbesondere bei Vorliegen von mindestens drei Platten je Teilkupplung 2, besonders vorteilhaft aus.

Durch das Verringern der Dicke der Platten Gegendruckplatten 17, Zwischenanpressplatten 19 und Anpressplatten 20 wird, unter der Annahme gleicher Reibdurchmesser, eine Gewichtsersparnis und eine Ersparnis bei der trägen Masse und daher eine Verbesserung beim Ansprechverhalten, bei der Dynamik des Kraftfahrzeugantriebsstrangs und beim Kraftstoffverbrauch erreicht.

Indem zwischen der Anpressplatte 20 und der Gegendruckplatte 17 wenigstens zwei Kupplungsscheiben 18 angeordnet sind, d.h. durch eine Integration von zwei Reibscheiben 18 je Teilkupplung 2, wird die erforderliche Klemmkraft zur reibschlüssigen Drehmomentübertragung reduziert. Dies kann einerseits zu einer Reduzierung der durch den Kupplungsbetätiger 45 aufzubringenden Betätigungskraft genutzt werden. Andererseits, bevorzugterweise, kann die Reduzierung der erforderlichen Klemmkraft zur Erhöhung des übertragbaren Drehmoments genutzt weden. So kann bei vergleichbar bleibenden Betätigungskräften das Drehmoment deutlich erhöht werden. Beispielsweise kann vorgesehen sein, dass das maximal übertragbare Drehmoment gezielt auf eine Belastbarkeit der sogenannten Einrücklager, wie des Kupplungsbetätigerlagers 48, der Drucktopflager 56 und des Druckplattenlagers 59, und/oder gezielt auf die zur Verfügung stehende Betätigungsenergie des Betätigungssystems, von welchen in den Figuren. 1 bis 3 im Wesentlichen der Kupplungsbetätiger 45 gezeigt ist, konstruktiv ausgelegt wird. Bei der Kupplung 1 sind alle Komponenten auf ein maximal übertragbares Drehmoment von 250 Nm ausgelegt. Vorzugsweise wird eine Sicherheitsreserve berücksichtigt.

Ferner kann die Reduzierung der erforderlichen Klemmkraft zur Reduzierung des Massenträgheitsmomentes genutzt werden, indem der Reibradius der Kupplung 1 oder der Teilkupplungen 2, d.h. der mittlere Reibradius, der innere Reibradius und/oder der äußere Reibradius reduziert wird. Als Reibradius wird hierbei der Reibradius einer ringartigen Kontaktfläche zwischen Reibbelag 33 und der jeweiligen Platte, wie Gegendruckplatte 17, Zwischenanpressplatte 19 und Anpressplatte 20 verstanden. Die Betätigungskräfte bleiben hierbei bevorzugt vergleichbar, es wird jedoch ein geringeres Massenträgheitsmoment und ein geringerer Kraftstoffverbrauch erzielt.

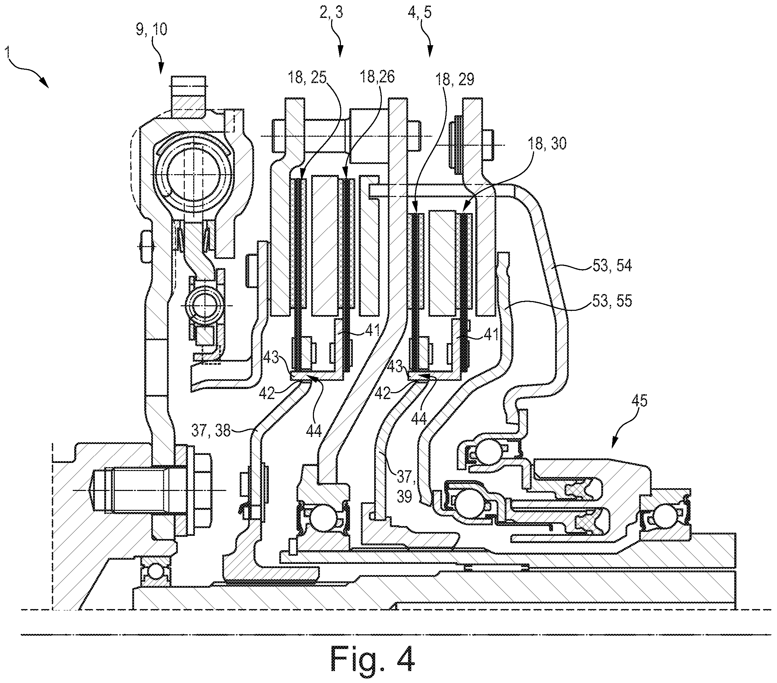

Eine erste Modifikation der ersten Ausführungsform wird im Folgenden anhand der Fig. 4 beschrieben. Gleiche bzw. vergleichbare Elemente sind mit denselben Bezugszeichen versehen und werden nicht erneut beschrieben.

An den Kupplungsträgern 37 ist jeweils eine Eingriffskontur 42 gebildet, in welche eine Eingreifkontur 43, welche an dem jeweiligen Haltebauteil 41 gebildet ist, eingreift. Die Eingriffskontur 42 und die Eingreifkontur 43 können beispielsweise nach Art einer Verzahnung 44, wie einer Steckverzahnung, zusammenwirken. Die Haltebauteile 41 sind bspw. mittels Umformschritten und/oder Stanzschritten gebildete Blechbauteile. Die Haltebauteile 41 haben bevorzugt eine L-Form.

Gemäß einer nicht figürlich dargestellten Variation kann die Eingriffskontur 42 als eine Außenverzahnung und die Eingreifkontur 43 als eine Innenverzahnung ausgebildet sein. Dadurch wird eine Fingerverzahnung realisiert. Gemäß einer nochmals weiteren, nicht figürlich dargestellten Variation kann die Eingriffskontur 42 als eine Innenverzahnung und die Eingreifkontur 43 als eine Außenverzahnung ausgebildet sein.

Sowohl bei der ersten Modifikation der ersten Ausführungsform wie auch bei den voranstehend beschriebenen Variationen ist die zweite Kupplungsscheibe 26 gegenüber der ersten Kupplungsscheibe 25 drehfest und axial verlagerbar befestigt, und ist die vierte Kupplungsscheibe 30 gegenüber der dritten Kupplungsscheibe 29 ebenfalls drehfest und axial verlagerbar befestigt. Die Übertragung von Drehmoment zwischen den jeweiligen Kupplungsscheiben 18 einer der Teilkupplungen 2 und der jeweiligen zugeordneten Getriebeeingangswelle 8 erfolgt (also) bevorzugt über jeweils eine stanzend und/oder umformend hergestellte Eingriffskontur 42 und Eingreifkontur 43, wobei die Eingreifkontur 43 formschlüssig und eine kupplungsschließende Bewegung der zweiten Kupplungsscheibe 26 relativ zu der ersten Kupplungsscheibe 25 und/oder der vierten Kupplungsscheibe 30 relativ zu der dritten Kupplungsscheibe 29 ermöglichend ausgebildet ist. Dies kann jedoch auch derart umgekehrt sein, dass beispielsweise die erste Kupplungsscheibe 25 gegenüber der zweiten Kupplungsscheibe 26 drehfest und axial verlagerbar befestigt ist. Die Eingriffskontur 42 und die Eingreifkontur 43 sind vorzugsweise gegengleich geformt.

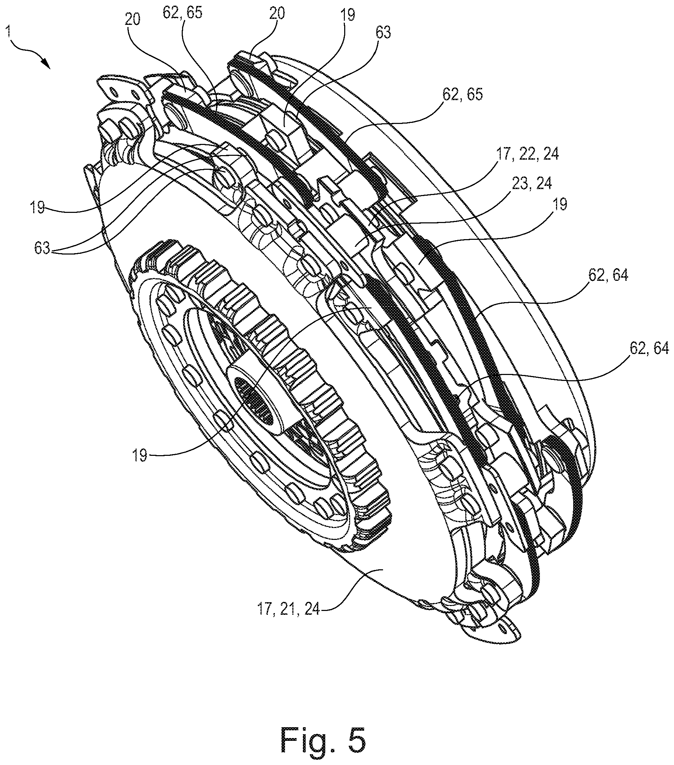

Eine zweite Modifikation der ersten Ausführungsform wird im Folgenden anhand der Fig. 5 beschrieben. Gleiche bzw. vergleichbare Elemente, wie in den voranstehenden Ausführungsformen haben dieselben Bezugszeichen und sind nicht erneut beschrieben.

Wie es voranstehend beschrieben wurde, werden die Kupplungsscheiben 18, die Zwischenanpressplatten 19 und die Anpressplatten 20 die jeweilige Teilkupplung 2 schließend und durch den jeweiligen Drucktopf 53 gedrückt auf die jeweilige Gegendruckplatte 17 der jeweiligen Teilkupplung 2 zu bewegt.

Anhand der Fig. 5 wird eine Lage von Blattfedern 62 verdeutlicht. Die Anpressplatten 20 und die Zwischenanpressplatten 19 sind über die Blattfedern 62 jeweils gelagert. Die Blattfedern 62 sind jeweils mit den Gegendruckplatten 17 verbunden.

Die Blattfedern 62 stellen eine Rückstellkraft zum Öffnen der Kupplung 1 bzw. der Teilkupplungen 2 zur Verfügung, bzw. bringen diese auf. Auf weitere rückstellende Federelemente, wie bspw. eine Hebelfeder, kann daher zum Verringern einer Neigung zum Rupfen verzichtet werden. Da die Betätigungsrichtung beim Schließen der Kupplung bei beiden Teilkupplungen 2 gleich ist, ist auch die Rückstellrichtung beim Öffnen der Kupplung 1 bei beiden Teilkupplungen 2 gleich. Dies ermöglicht einerseits bei den Blattfedern 62 Gleichteile zu verwenden, und vereinfacht andererseits die Montage der Kupplung 1.

Gemäß eines in der Fig. 5 dargestellten optionalen Aspekts werden die Zwischenanpressplatten 19 mittels jeweiliger Beabstandungsniete 63, welche mit den Zwischenanpressplatten 19 nach Art eines Niets verbunden sind, weggekoppelt. Dabei ist es besonders bevorzugt, wenn die Wegkopplung einen Betätigungs- und/oder Ausrückweg der Zwischenanpressplatten 19 mit einem Betätigungs- und/oder Ausrückweg der Anpressplatten 20 koppelt. Es ist also eine Wegkopplung erreichbar.

Die Blattfedern 62 der Kupplung 1 umfassen sowohl jeweils einer der Zwischenanpressplatten 19 zugeordnete Blattfedern 64, wie auch jeweils einer der Anpressplatten 20 zugeordnete Blattfedern 65. Die Platten Zwischenanpressplatten 19 und Anpressplatten 20 sind jeweils mit nur einer Blattfeder 62 oder mit jeweils einer Vielzahl an Blattfedern 62 rückstellbar vorzusehen. Es ist besonders bevorzugt, wenn jeder der Platten Zwischenanpressplatten 19 und Anpressplatten 20 eine Vielzahl von in Umfangsrichtung gleichmäßig verteilter und/oder einen auf der Längsachse bzw. Rotationsachse X liegenden Massenmittelpunkt erreichend angeordneter Blattfedern 62 auf die jeweilige Platte rückstellend wirkend zugeordnet sind.

Die Blattfedern 62 sind vorzugsweise zum Positionieren der jeweiligen Zwischenanpressplatte 19 und/oder Anpressplatte 20 ausgestaltet und angeordnet.

Durch Positionieren der Zwischenanpressplatten 19 mittels Zusammenwirkens der Beabstandungsniete 63 und der Blattfedern 64 und 65 wird ermöglicht, dass bevorzugt alle Kupplungsscheiben 18 der jeweiligen Teilkupplung 2 ein angemessen großes / oder ausreichend großes Lüftspiel in axialer Richtung haben, um ein Schleppmoment zu verhindern.

Die vorgestellte Konfiguration ermöglicht in vorteilhafter Weise ein Rückstellen ausschließlich mit Blattfedern, so dass auf Tellerfedern verzichtet werden kann. Dies verursacht einerseits Synergieeffekte mit der vorgestellten Direktbetätigung der Kupplung 1 bzw. der jeweiligen Teilkupplungen 2. Andererseits ermöglicht dies den Verzicht auf kippsteife Hebelfedern. Somit wird der Effekt erreicht, dass Momentenschwankungen aufgrund geometrischer Fehler reduziert werden können. Dies verringert nochmals die Rupfempfindlichkeit der gesamten Kupplung 1. Ein kippweiches System, wie die vorgestellte Kupplung 1 mit deren Mechanismus zum Einrücken, wie bspw. dem Kupplungsbetätiger 45 und den steifen Drucktöpfen 53, und deren Mechanismus zum Ausrücken, wie den Blattfedern 62, ist daher vorteilhaft.

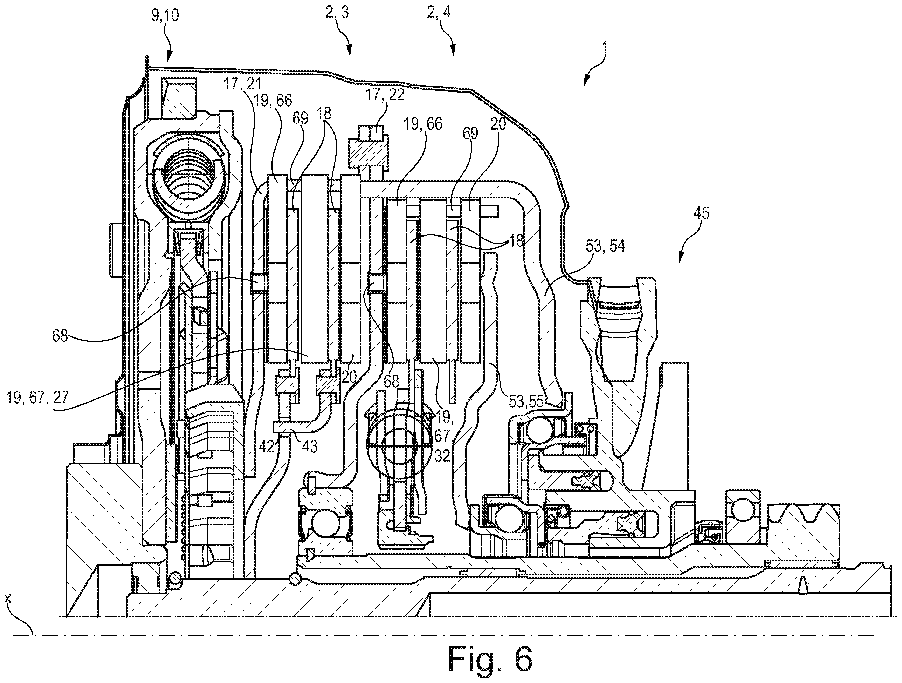

Eine zweite Ausführungsform wird im Folgenden kurz anhand der Fig. 6 beschrieben. Gleiche Elemente oder vergleichbare Elemente sind mit denselben Bezugszeichen versehen und werden nicht erneut beschrieben. Die Fig. 6 zeigt die Kupplung 1 nach einem Konzept eines Achtplattendesigns. Die acht Platten der Kupplung 1 sind zwei Gegendruckplatten 17, vier Zwischenanpressplatten 19 und zwei Anpressplatten 20. Dabei hat jede Teilkupplung 2 neben einer Gegendruckplatte 17 und einer Anpressplatte 20 eine axial festgelegte Zwischenanpressplatte 66 und eine axial verlagerbare Zwischenanpressplatte 67, welche mit den Anpressplatten 28 und 32 oder mit den Zwischenanpressplatten 27 und 31 gemäß der ersten Ausführungsform vergleichbar ist. Die axial festgelegten Zwischenanpressplatten 66 sind an der jeweiligen Gegendruckplatte 17 befestigt, etwa mittels eines Niets 68.

Darüber hinaus hat jede der Gegendruckplatten 17 einen Führungsabschnitt 69, der auch als Führung bezeichnet wird. Der Führungsabschnitt 69 kann einteilig oder zweiteilig mit der jeweiligen Zwischenanpressplatte 19 ausgebildet sein. Die jeweilige Zwischenanpressplatte 19 kann auch eine Vielzahl in Umfangsrichtung vorzugsweise gleichmäßig verteilter Führungsabschnitte 69 haben.

An dem jeweiligen Führungsabschnitt 69 sind die jeweilige axial verlagerbare Zwischenanpressplatte 67 und die jeweilige Anpressplatte 20 drehfest und axial verlagerbar geführt bzw. befestigt, gelagert oder aufgehängt. Der Führungsabschnitt 69 kann zum Führen der axial verlagerbaren Zwischenanpressplatten 67 und der Anpressplatten 20 jeweils bspw. nach Art einer Schiene, nach Art einer Verzahnung, nach Art eines Durchgriffs oder dergleichen ausgeführt sein, wobei eine Verzahnung die bevorzugte Gestaltung darstellt. Mittels der Führungsabschnitte 69 wird erreicht, dass die Blattfedern 62 (in Fig. 6 nicht dargestellt) nicht zum Übertragen eines Drehmoment verwandt werden, so dass die Blattfedern 62 entsprechend geringer dimensioniert werden können.

Gemäß der zweiten Ausführungsform weist jede der Kupplungsscheiben 18 zumindest eine Belagsfederung, wie eine Belagsfeder 35, auf.

Gemäß einer nicht figürlich dargestellten Modifikation der zweiten Ausführungsformen weist nur eine Kupplungsscheibe 18 jeder der Teilkupplungen 2 eine Belagsfederung, wie eine Belagsfeder 35, auf.

Gemäß einer weiteren nicht figürlich dargestellten Modifikation der zweiten Ausführungsform weist jeder Reibbelag 33 jeder der Kupplungsscheiben 18 eine Belagsfederung, wie bspw. die Belagsfeder 35, auf.

Gemäß einer nochmals anderen nicht figürlich dargestellten Modifikation der zweiten Ausführungsform weist keine der Kupplungsscheiben 18 eine Belagsfederung auf. In diesem Fall kann anstelle der axial festgelegten Zwischenanpressplatte 66 eine federnd gelagerte bzw. abgestützte und axial eng begrenzt verlagerbare Zwischenanpressplatte (nicht figürlich dargestellt) vorgesehen sein, welche unter Einwirkung einer axial zwischen der jeweiligen Gegendruckplatte 17 und der jeweiligen axial eng begrenzt verlagerbaren Zwischenanpressplatte wirkenden Federwirkung oder einer solchen Federung ein Ausgleichen geometrischer Fehler bewirken kann.

Gemäß einer weiteren, nicht figürlich dargestellten Modifikation der zweiten Ausführungsform ist zwischen der Führung 69 und der Zwischenanpressplatte 19 ein Federelement angeordnet. Dieses Federelement ist insbesondere zum Abstützen in axialer Richtung zum Ausgleichen von geometrischen Fehlern und/oder zum Lüften der jeweiligen Kupplungsscheibe 18 ausgebildet. Dieses Federelement kann auch oder alternativ zum Abstützen in radialer Richtung zum Ausgleichen von beispielsweise Fluchtungsfehlern ausgebildet sein. Zusätzlich oder alternativ kann das Federelement zum Abstützen in Umfangsrichtung zum Auffangen von Drehmomentstößen oder derartigem ausgebildet sein.

Eine dritte Ausführungsform der Erfindung ist nicht figürlich dargestellt. Die dritte Ausführungsform der Erfindung ist eine als Einfachkupplung ausgeführte Kupplung 1. Diese Einfachkupplung kann bspw. dadurch erreicht werden, dass die Kupplung 1 gemäß der ersten Ausführungsform nur eine Teilkupplung 2, wie bspw. die erste Teilkupplung 3, aufweist. Mit dieser Einfachkupplung 1 sind dieselben Vorteile wie bei den Ausführungsformen 1 und 2 sowie deren Modifikationen erreichbar.

### Bezugszeichenliste

- 1: Kupplung
- 2: Teilkupplung
- 3: erste Teilkupplung
- 4: zweite Teilkupplung
- 5: Kurbelwelle
- 6: erste Getriebeeingangswelle
- 7: zweite Getriebeeingangswelle
- 8: Getriebeeingangswelle
- 9: Schwungradbaugruppe
- 10: Zweimassen-Schwungrad
- 11: Schwungrad
- 12: Primärschwungrad
- 13: Sekundärschwungrad
- 14: Spiralfeder
- 15: Versatzausgleichselement
- 16: Steckverzahnung
- 17: Gegendruckplatte
- 18: Kupplungsscheibe
- 19: Zwischenanpressplatte
- 20: Anpressplatte
- 21: erste Gegendruckplatte
- 22: zweite Gegendruckplatte
- 23: Bolzen
- 24: gemeinsame Gegendruckplatte
- 25: erste Kupplungsscheibe
- 26: zweite Kupplungsscheibe
- 27: erste Zwischenanpressplatte
- 28: erste Anpressplatte
- 29: dritte Kupplungsscheibe
- 30: vierte Kupplungsscheibe
- 31: zweite Zwischenanpressplatte
- 32: zweite Anpressplatte
- 33: Reibbelag
- 34: Belagsgrundscheibe
- 35: Belagsfeder
- 36: Niet
- 37: Kupplungsträger
- 38: erster Kupplungsträger
- 39: zweiter Kupplungsträger
- 40: Keilwellenverzahnung
- 41: Haltebauteil
- 42: Eingriffskontur
- 43: Eingreifkontur
- 44: Verzahnung
- 45: Kupplungsbetätiger
- 46: konzentrischer Nehmerzylinder
- 47: hohlzylindrische Zylinderkammer
- 48: Kupplungsbetätigerlager
- 49: hohlzylindrischer Kolben
- 50: erster Kolben
- 51: zweiter Kolben
- 52: Getriebeboden
- 53: Drucktopf
- 54: erster Drucktopf
- 55: zweiter Drucktopf
- 56: Drucktopflager
- 57, 58: Schrägkugellager
- 59: Druckplattenlager
- 60: Schrägkugellager
- 61: Nabenabschnitt der zweiten Gegendruckplatte
- 62: Blattfeder
- 63: Beabstandungsniet
- 64: einer Zwischenanpressplatte zugeordnete Blattfeder
- 65: einer Anpressplatte zugeordnete Blattfeder
- 66: axial festgelegte Zwischenanpressplatte
- 67: axial verlagerbare Zwischenanpressplatte
- 68: Niet
- 69: Führungsabschnitt
- X: Längsachse

## Patentansprüche

1. Kupplung (1) für ein Kraftfahrzeug, mit einem Kupplungsbetätigungsorgan (45), das zum Kupplungsbetätigen mit einem Drucktopf (53) in Wirkbeziehung bringbar ist, wobei der Drucktopf (53) zum Einklemmen wenigstens einer Kupplungsscheibe (18) zwischen einer Anpressplatte (20) und einer Gegendruckplatte (17) an der Anpressplatte (20) angreift, wobei an einer der Kupplungsscheiben (18) ein, mit einer weiteren Kupplungsscheibe (18) wirkverbundener und zum Drehmomentweitergebenden an eine Abtriebswelle eingerichteter Träger (37) angebracht ist und die Kupplungsscheibe (18) einen Reibbelag (33) aufweist, wobei zwischen dem Reibbelag (33) und dem Träger (37) eine in Axialrichtung vorspannende Feder (35) angeordnet ist oder an nur einer Kupplungsscheibe (18) zwischen der Anpressplatte (20) und der Gegendruckplatte (17) eine einzige in Axialrichtung vorspannende Feder (35) vorhanden ist, so dass zwischen der Anpressplatte (20) und der Gegendruckplatte (17) wenigstens zwei Kupplungsscheiben (18) und eine zwischen diesen einklemmbare Zwischenanpressplatte (19) angeordnet sind, wobei zumindest eines der Bauteile Anpressplatte (20), Zwischenanpressplatte (19) und Gegendruckplatte (17) als Blechplatte ausgebildet ist.

2. Kupplung (1) nach Anspruch 1, **dadurch gekennzeichnet, dass** die Kupplung (1) als Teilkupplung (2) einer Doppelkupplung mit zwei Getriebeeingangswellen(8) oder als Einfachkupplung mit nur einer Getriebeeingangswelle (8) ausgeführt ist.

3. Kupplung (1) nach einem der Ansprüche 1 bis 2, **dadurch gekennzeichnet, dass** das Kupplungsbetätigungsorgan (45) axial und/oder radial an einer Getriebeeingangswelle (8) gelagert ist.

4. Kupplung (1) nach Anspruch 3, **dadurch gekennzeichnet, dass** sich die Gegendruckplatte (17) auf derselben Getriebeeingangswelle (8) wie das Kupplungsbetätigungsorgan (45) axial und/oder radial abgestützt.

5. Kupplung (1) nach einem der Ansprüche 1 bis 4, **dadurch gekennzeichnet, dass** der Träger (37) der einen der zumindest zwei Kupplungsscheiben (18) in Umfangsrichtung die andere Kupplungsscheibe (18) zum Aufnehmen des jeweiligen Kupplungsdrehmoments lagert.

6. Kupplung (1) nach Anspruch 5, **dadurch gekennzeichnet, dass** eine der Kupplungsscheiben (18) eine Eingriffskontur (42) aufweist, in welche zum Übertragen von Drehmoment zumindest eine andere Kupplungsscheibe (18) axial verlagerbar eingreift.

7. Doppelkupplung mit zwei Teilkupplungen, die gemäß der Kupplung (1) nach einem der Ansprüche 1 bis 6 ausgestaltet sind.

## Claims

1. Clutch (1) for a motor vehicle, having a clutch actuating member (45) which can be moved into an operative relationship with a pressure pot (53) for clutch actuation, the pressure pot (53) acting on a pressure plate (20) in order to clamp in at least one clutch disc (18) between the pressure plate (20) and a counterpressure plate (17), a carrier (37) which is operatively connected to a further clutch disc (18) and is set up for forwarding torque to an output shaft being attached to one of the clutch discs (18), and the clutch disc (18) having a friction lining (33), a spring (35) which prestresses in the axial direction being arranged between the friction lining (33) and the carrier (37), or there being a single spring (35) which prestresses in the axial direction on only one clutch disc (18) between the pressure plate (20) and the counterpressure plate (17), with the result that at least two clutch discs (18) and an intermediate pressure plate (19) which can be clamped in between them are arranged between the pressure plate (20) and the counterpressure plate (17), at least one of the components of pressure plate (20), intermediate pressure plate (19) and counterpressure plate (17) being configured as a metal sheet.

2. Clutch (1) according to Claim 1, **characterized in that** the clutch (1) is configured as a component clutch (2) of a double clutch with two transmission input shafts (8), or as a single clutch with only one transmission input shaft (8).

3. Clutch (1) according to either of Claims 1 and 2, **characterized in that** the clutch actuating member (45) is mounted axially and/or radially on a transmission input shaft (8).

4. Clutch (1) according to Claim 3, **characterized in that** the counterpressure plate (17) is supported axially and/or radially on the same transmission input shaft (8) as the clutch actuating member (45).

5. Clutch (1) according to one of Claims 1 to 4, **characterized in that** the carrier (37) of the one of the at least two clutch discs (18) mounts the other clutch disc (18) in the circumferential direction in order to absorb the respective clutch torque.

6. Clutch (1) according to Claim 5, **characterized in that** one of the clutch discs (18) has an engagement contour (42), into which at least one other clutch disc (18) engages in an axially movable manner for the transmission of torque.

7. Double clutch having two component clutches which are configured in accordance with the clutch (1) according to one of Claims 1 to 6.

## Revendications

1. Embrayage (1) destiné à un véhicule automobile, l'embrayage comprenant un élément d'actionnement d'embrayage (45) pouvant être amené en relation fonctionnelle avec un pot de pression (53) pour actionner l'embrayage,
le pot de pression (53) venant en engagement sur une plaque de pression (20) pour serrer au moins un disque d'embrayage (18) entre la plaque de pression (20) et une plaque de contre-pression (17), un support (37) étant monté sur l'un des disques d'embrayage (18), lequel support est relié fonctionnellement à un autre disque d'embrayage (18) et adapté pour transférer le couple à un arbre de sortie, et le disque d'embrayage (18) comportant une garniture de friction (33), un ressort de précontrainte axiale (35) étant disposé entre la garniture de friction (33) et le support (37) ou un ressort de précontrainte axiale unique (35) étant présent seulement sur un disque d'embrayage (18) entre la plaque de pression (20) et la plaque de contre-pression (17), de sorte qu'au moins deux disques d'embrayage (18) et une plaque de pression intermédiaire (19), pouvant être serrée entre ceux-ci, soient disposés entre la plaque de pression (20) et la plaque de contre-pression (17), au moins l'un des composants plaque de pression (20), plaque de pression intermédiaire (19) et plaque de contre-pression (17) étant conçu comme une plaque de tôle.

2. Embrayage (1) selon la revendication 1, **caractérisé en ce que** l'embrayage (1) est réalisé sous la forme d'une partie d'embrayage (2) d'un double embrayage à deux arbres d'entrée de transmission (8) ou sous la forme d'un embrayage simple à un seul arbre d'entrée de transmission (8).

3. Embrayage (1) selon l'une des revendications 1 et 2, **caractérisé en ce que** l'élément d'actionnement d'embrayage (45) est monté axialement et/ou radialement sur un arbre d'entrée de transmission (8).

4. Embrayage (1) selon la revendication 3, **caractérisé en ce que** la plaque de contre-pression (17) s'appuie axialement et/ou radialement sur le même arbre d'entrée de transmission (8) que l'élément d'actionnement d'embrayage (45).

5. Embrayage (1) selon l'une des revendications 1 à 4, **caractérisé en ce que** le support (37) de l'un des au moins deux disques d'embrayage (18) reçoit, dans la direction périphérique, l'autre disque d'embrayage (18) pour recevoir le couple d'embrayage respectif.

6. Embrayage (1) selon la revendication 5, **caractérisé en ce que** l'un des disques d'embrayage (18) présente un contour d'engagement (42), au moins un autre disque d'embrayage (18) s'engageant de manière déplaçable axialement pour la transmission du couple.

7. Double embrayage comprenant deux parties d'embrayage qui sont conçues selon l'embrayage (1) selon l'une des revendications 1 à 6.
